# EUROPÄISCHE PATENTANMELDUNG

(11) **EP 2 696 606 A1**
(43) Veröffentlichungstag der Anmeldung: **12.02.2014**
(21) Anmeldenummer: 12180033.8
(22) Anmeldetag: 10.08.2012
(51) Int. Cl.: H04W 4/02, H04W 4/20

(54) **Sammeln von Positionsdaten**

(71) Anmelder: Deutsche Post AG, 53113 Bonn (DE)
(72) Erfinder: Josefiak, Frank, 53177 Bonn (DE); Böttcher, Gero, 33607 Bielefeld (DE); Modabber, Baktash, 50859 Köln (DE)
(74) Vertreter: Cohausz & Florack

(57) **Zusammenfassung**

Für eine vereinfachte zentrale Sammlung von Daten über Wasser- und Luftfahrzeuge erfasst eine Vorrichtung 100 von Wasser- und/oder Luftfahrzeugen 251, 252 ausgesandte Signale über mindestens eine erste Funkschnittstelle 130, 131 der Vorrichtung 100. Die Signale von einem jeweiligen Fahrzeug 251, 252 umfassen dabei Daten, die zumindest eine Position des Fahrzeugs 251, 252 angeben. Die Vorrichtung übermittelt von auf den empfangenen Signalen basierenden Daten an einen vorgegebenen Server 220 über eine weitere Funkschnittstelle 140, 141 der Vorrichtung 100. Ein System umfasst mindestens eine solche Vorrichtung 100, 200 und den Server 220.

## Beschreibung

### Gebiet der Erfindung

Die vorliegende Erfindung betrifft unter anderem ein Verfahren, eine Vorrichtung, ein System, ein Programm und ein Speichermedium zum Sammeln von Positionsdaten, insbesondere von Positionsdaten von Wasser- und/oder Luftfahrzeugen.

### Hintergrund der Erfindung

Eine Übermittlung von Positions- und Fahrtrichtungsdaten von Schiffen bzw. Flugzeugen wird heutzutage in erster Linie dafür genutzt, um den Teilnehmern im Schifffahrts- bzw. Flugverkehr einen Überblick über die gegenwärtige Verkehrssituation in der unmittelbaren Umgebung zu ermöglichen und somit in diesen Räumen die Sicherheit zu erhöhen und den Verkehrsfluss zu verbessern.

Das Automatic Identification System (AIS) ist beispielsweise ein Funksystem, das durch den Austausch von Navigations- und anderen Daten die Sicherheit und die Lenkung des Schiffverkehrs verbessert. Jedes Schiff, das mit einer AIS-Einheit ausgestattet ist, sendet verschiedene schiffspezifische Daten, die von jedem AIS-Empfangsgerät in Reichweite empfangen und ausgewertet werden können. Die Daten umfassen beispielsweise einen Navigationsstatus, die Schiffsposition, Rufzeichen, Name des Schiffs und Schiffstyp. Nach der Internationalen Seeschifffahrts-Organisation (International Maritime Organization, IMO) sind Passagierschiffe, Fähren, Frachter und Tanker über 300 BRT (Bruttoregistertonne) seit 2008, Seeschiffe seit Anfang 2005, verpflichtend mit AIS-Anlagen auszustatten. Die AIS-Signale werden auf zwei UKW (Ultrakurzwellen) Seefunkkanälen in einem festen Zeitrahmen gesendet. Normalerweise erfolgt die Übertragung auf AIS1, d.h. UKW-Kanal 87B mit der Frequenz 161,975 MHz, und auf AIS2, d.h. UKW-Kanal 88B mit der Frequenz 162,025 MHz. In einem entsprechenden Empfänger werden die Daten dekodiert und dann beispielsweise als Textinformation oder ähnlich wie in einem Radarbild grafisch dargestellt.

Das ADS-B (Automatic Dependent Surveillance - Broadcast) ist beispielsweise ein Luftraumüberwachungskonzept, bei dem Luftfahrzeuge und Bodenstation gleichermaßen in regelmäßigen Zeitabständen ihre Position und gegebenenfalls weitere Informationen mittels entsprechender Transponder aussenden. Die Position wird dabei als geografische Länge, Breite und Höhe angegeben. ADS-B nutzt für die Übertragung eine Frequenz von 1090 MHz. Andere Luftfahrzeuge oder Bodensysteme können diese Informationen empfangen und verarbeiten. Bestimmt ein Luftfahrzeug seine Position mit Hilfe eines eigenen Navigationssystems selbst und stellt die ermittelte Position anderen zur Verfügung, so ist die Position deutlich zuverlässiger als eine Position des Flugzeugs, die von einem Luftraumüberwachungssysteme zum Beispiel mittels Radar bestimmt wird. Somit kann ADS-B einen Beitrag zur Steigerung der Sicherheit und Kapazität im Luftverkehr und zu einer effizienteren Verwaltung in der Luftraumüberwachung liefern.

### Allgemeine Beschreibung einiger beispielhafter Ausführungsformen der Erfindung

Die Erfindung basiert auf der Überlegung, dass Positionsdaten von Wasser und/oder Luftfahrzeugen nicht nur zur Erhöhung der Sicherheit im unmittelbaren Umfeld der Teilnehmer verwendet werden können, sondern auch als Informationsquelle für andere Akteure, wie zum Beispiel Spediteure, Flughäfen, Logistiker, Küstenwachen, etc. Für solche Personengruppen sind aber nicht nur Daten von Schiffen oder Flugzeugen von Interesse, die sich in ihrem direkten Umfeld befinden und deren Signale von Empfangsstationen vor Ort erfasst werden.

Der Erfindung liegt daher die Aufgabe zugrunde eine Möglichkeit bereitzustellen, Positionsdaten von Wasser- und/oder Luftfahrzeugen umfassend und mit geringem Aufwand zentral zu sammeln.

Die Aufgabe wird gelöst durch ein Verfahren gemäß Anspruch 1, eine Vorrichtung gemäß Anspruch 10, ein System gemäß Anspruch 12, ein Programm gemäß Anspruch 13 und ein Speichermedium gemäß Anspruch 14. Weitere Ausführungsformen sind den abhängigen Ansprüchen zu entnehmen.

Ein beispielhaftes erfindungsgemäßes Verfahren umfasst, ausgeführt von einer Vorrichtung, ein Erfassen von von Wasser- und/oder Luftfahrzeugen ausgesandten Signalen über mindestens eine erste Funkschnittstelle, wobei die Signale von einem jeweiligen Fahrzeug Daten umfassen, die zumindest eine Position des Fahrzeugs angeben. Das Verfahren umfasst ferner ein Übermitteln von auf den empfangenen Signalen basierenden Daten an einen vorgegebenen Server über eine weitere Funkschnittstelle.

Die Erfindung sieht also für bestimmte beispielhafte Ausführungsformen vor, dass Fahrzeugdaten erfasst und an einen Server weitergeleitet werden, wobei auch die Weiterleitung über eine Funkschnittstelle erfolgen kann. Die Daten können vor der Weiterleitung bearbeitet und/oder ergänzt werden. Sie müssen auch nicht vollständig weitergeleitet werden.

Ein möglicher Vorteil der Erfindung liegt darin, dass sie es einem Server ermöglicht, die weitergeleiteten Daten von einer Vielzahl solcher Vorrichtungen zu sammeln. Durch die Vorgabe eines bestimmten Servers kann die Übertragung der Daten durch die Vorrichtungen vereinfacht oder automatisiert oder weitgehend automatisiert werden. Ein möglicher Vorteil der Erfindung liegt ferner darin, dass für die Übertragung der Daten darauf verzichtet werden kann, die Vorrichtung an einen PC mit Internetzugang anzuschließen. Hierdurch können verschiedenartige mögliche Schwierigkeiten vermieden werden, beispielsweise, dass am PC kein Anschluss, wie zum Beispiel ein USB Port, frei ist, dass ein Treiber nicht erkannt wird oder dass eine Installation nicht funktioniert. Des weiteren erlaubt die Übertragung der Daten über eine Funkschnittstelle eine Übertragung ohne direkte Anbindung an das Telefonnetz oder an anderweitige Datenübertragungsleitungen. Durch die Nutzung einer Funkschnittstelle kann somit insbesondere der Einsatz in solchen Gebieten erleichtert werden, in denen eine Anbindung an ein vorhandenes Netz schwierig ist, wie beispielsweise an entlegenen Küstenabschnitten, auf Ölplattformen oder an Offshore-Windanlagen, aber auch auf Dächern von Hochhäusern oder Leuchttürme, oder auf Brücken über Wasserwege, usw.

Eine beispielhafte erfindungsgemäße Vorrichtung umfasst Mittel zur Ausführung des erfindungsgemäßen Verfahrens. Die Vorrichtung kann beispielsweise ein autonom arbeitendes Gerät, etwa in Form einer im Wesentlichen kompakten Box, oder eine Komponente für ein solches Gerät sein.

Eine beispielhafte erfindungsgemäße Vorrichtung umfasst zumindest einen Prozessor und zumindest einen Speicher, wobei in dem Speicher ein Programmanweisungen umfassendes Programm gespeichert ist, und wobei der Speicher und das Programm eingerichtet sind, um, mit dem Prozessor, die Vorrichtung zumindest zu veranlassen, das erfindungsgemäße Verfahren auszuführen, wenn das Programm auf dem Prozessor ausgeführt wird. Die Vorrichtung ist beispielsweise softwaremäßig eingerichtet, um das Verfahren ausführen zu können. Unter softwaremäßig eingerichtet soll dabei insbesondere die Vorbereitung der Vorrichtung verstanden werden, die notwendig ist, um ein Verfahren beispielsweise in Form eines Programms auf dem Prozessor ausführen zu können.

Unter einem Prozessor sollen unter anderem eine oder mehrere Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Ein Speicher ist beispielsweise ein Programmspeicher und/oder ein Hauptspeicher des Prozessors. Unter einem Programmspeicher soll unter anderem ein nicht-flüchtiger Speicher und unter einem Hauptspeicher ein flüchtiger oder ein nicht-flüchtiger Speicher, insbesondere ein Speicher mit wahlfreiem Zugriff (RAM) und/oder ein Flash-Speicher, verstanden werden. Nicht-flüchtige Speicher sind z.B. Speicher mit wahlfreiem Zugriff (RAM) wie z.B. NOR-Flash-Speicher oder mit sequentiellem Zugriff wie z.B. NAND-Flash-Speicher und/oder Speicher mit Nur-Lese-Zugriff (ROM) wie z.B. EPROM-, EEPROM-, oder ROM-Speicher. Der Speicher kann beispielsweise gegenständlich ausgebildet sein.

Ein beispielhaftes erfindungsgemäßes System umfasst mindestens eine erfindungsgemäße Vorrichtung und einen Server, der eingerichtet ist zum Empfangen und Verarbeiten der Daten von einer Mehrzahl von erfindungsgemäßen Vorrichtungen.

Ein beispielhaftes erfindungsgemäßes Programm umfasst Programmanweisungen, wobei die Programmanweisungen eine Vorrichtung zur Ausführung des erfindungsgemäßen Verfahrens veranlassen, wenn das Programm von dem Prozessor ausgeführt wird. Ein Programm ist beispielsweise über ein Netz wie ein lokales Netz, ein Weitverkehrsnetz, ein virtuelles Netz, ein Funknetz, wie ein Mobilfunknetz, ein sonstiges Telefonnetz und/oder das Internet verteilbar. Ein Programm kann zumindest teilweise Software und/oder Firmware eines Prozessors sein. Zum Beispiel ist das erfindungsgemäß Programm in einem Speicher der erfindungsgemäßen Vorrichtung gespeichert. Es versteht sich, dass unter dem Begriff Programm jeweils auch eine Zusammenstellung mehrerer Programme verstanden werden kann.

Ein beispielhaftes erfindungsgemäßes Speichermedium speichert das erfindungsgemäße Programm. Das Speichermedium ist beispielsweise ein computerlesbares Speichermedium, welches das erfindungsgemäße Programm enthält und zum Beispiel als magnetisches, elektrisches, elektromagnetisches, optisches und/oder andersartiges Speichermedium ausgebildet ist. Das Speichermedium kann insbesondere ein physikalisches und/oder gegenständliches Speichermedium sein. Das Speichermedium ist beispielsweise tragbar oder in einer Vorrichtung fest installiert. "Computerlesbar" soll insbesondere so verstanden werden, dass das Speichermedium von einem Computer bzw. einer Datenverarbeitungsvorrichtung (aus)gelesen und/oder beschrieben werden kann, beispielsweise von einem Prozessor. Das Speichermedium ist beispielsweise ein Programmspeicher eines Prozessors.

In einer beispielhaften Ausführungsform umfasst die Vorrichtung ein Mobilfunkmodul. Nach einer Aktivierung der Vorrichtung können die auf den empfangenen Signalen basierenden Daten dann automatisch mittels des Mobilfunkmoduls über die weitere Funkschnittstelle zum Server übertragen werden. Ein Mobilfunkmodul ist ein Modul, das eine Kommunikation gemäß einem Mobilfunkstandard ermöglicht. Es kann beispielsweise ein GSM (Global System for Mobile Communications) und/oder GPRS (General Packet Radio Service) Modul sein, aber ebenso ein Modul, das einen beliebigen anderen Mobilfunkstandard unterstützt, wie UMTS (Universal Mobile Telecommunications System), LTE (Long Term Evolution), usw. Die für die Datenübertragung genutzte weitere Funkschnittstelle ist dann eine entsprechende Mobilfunkschnittstelle. Die Nutzung eines Mobilfunkmoduls für die Übertragung der Daten zum Server kann den Vorteil bieten, dass eine Übertragung in weiten Teilen der Welt flächendeckend möglich ist.

In einer beispielhaften Ausführungsform umfasst die Vorrichtung ebenfalls ein Mobilfunkmodul. Nach einer Aktivierung der Vorrichtung kann dann automatisch eine Registrierung der Vorrichtung bei dem Server über eine Funkschnittstelle mittels des Mobilfunkmoduls erfolgen. Die Funkschnittstelle kann dabei die gleiche sein wie die, über die zumindest zeitweise die vorgesehenen Daten übertragen werden, oder eine andere. Diese Ausführungsform kann den Vorteil bieten, dass der Server einen Überblick hat, von wie vielen Vorrichtungen er zurzeit Daten erhält. Ebenso kann so nachgehalten werden, welche der ausgelieferten Vorrichtungen tatsächlich aufgestellt wurden. Wird bei einer Registrierung neben einer reinen Identifizierung auch die Position der Vorrichtung übermittelt, so kann anhand der Registrierungen einer Vielzahl von Vorrichtungen auch ermittelt werden, in welchen Gegenden Vorrichtungen zum Erfassen einer umfassende Datenlage noch fehlen.

In einer beispielhaften Ausführungsform umfasst die Vorrichtung ein Modul für eine Kommunikation mit lokalen Funknetzen (WLAN-Modul). Nach einer Aktivierung der Vorrichtung kann dann von der Vorrichtung automatisch eine Suche nach lokalen Funknetzen durchgeführt werden. Sofern ein geeignetes lokales Funknetz erfasst wird, können die auf den empfangenen Signalen basierenden Daten mittels des Moduls für eine Kommunikation mit lokalen Funknetzen über die weitere Funkschnittstelle und über das erfasste lokale Funknetz an den Server übermittelt werden. Die für die Datenübertragung genutzte weitere Funkschnittstelle ist dann eine entsprechende WLAN-Funkschnittstelle. Dies kann den Vorteil bieten, dass die Übertragung der Daten zum Server besonders kostengünstig erfolgen kann. Die Vorrichtung kann dabei für die Datenübertragung ausschließlich ein Modul für eine Kommunikation mit lokalen Funknetzen umfassen; sie kann aber zusätzlich auch ein Mobilfunkmodul umfassen, das für die Übertragung der Daten genutzt wird, wenn kein lokales Funknetz zur Verfügung steht.

Generell kann eine Vorrichtung in beispielhaften Ausführungsformen also auch eine von mehreren Funkschnittstellen für die Datenübertragung auswählen, etwa in Abhängigkeit von der jeweiligen Situation.

In einer beispielhaften Variation dieser Ausführungsform weist die Vorrichtung zusätzlich ein Mobilfunkmodul auf. Die Vorrichtung kann dann Informationen, die sich auf ein bei der Suche erfasstes lokales Funknetz beziehen, mittels des Mobilfunkmoduls an den Server senden. Die an den Server übermittelten Informationen kann eine Angabe enthalten, ob das gefundene lokale Funknetz einen Zugangscode erfordert. Die Vorrichtung kann ferner einen Zugangscode für das gefundene lokale Funknetz vom Server mittels des Mobilfunkmoduls empfangen. Die Vorrichtung kann sich ferner vor einem Übermitteln der auf den empfangenen Signalen basierenden Daten über das bei der Suche erfasste lokale Funknetz bei dem lokalen Funknetz mittels des empfangenen Zugangscodes anmelden. Dies kann den Vorteil bieten, dass auch lokale Funknetze mit Zugangscode für die Übertragung genutzt werden können, sofern der Server in der Lage ist, Zugriff auf den Zugangscode zu erhalten. Der Zugangscode kann gegebenenfalls ermittelt werden, indem Bedienpersonal bei dem Betreiber des lokalen Funknetzes anfragt, ob eine Nutzung gestattet werden kann. Es versteht sich, dass optional nur Informationen über ausgewählte lokale Funknetze an den Server übermittelt werden können, beispielsweise nur über solche, die einen Zugangscode benötigen und/oder nur über solche, von denen die stärksten Signale empfangen werden.

In einer beispielhaften Ausführungsform erfolgt die Erfassung der von Wasser- und/oder Luftfahrzeugen ausgesandten Signale automatisch ab Fertigstellung der Vorrichtung. Dies kann den Vorteil bieten, dass keine weiteren Vorkehrungen erforderlich sind, um die Erfassung zu starten. Alternativ kann sie nach einer Aktivierung der Vorrichtung veranlasst werden. Dies kann den Vorteil bieten, dass Energie aus einer gegebenenfalls vorhandenen Batterie oder aus einem gegebenenfalls vorhandenen Akkumulator der Vorrichtung nicht genutzt wird, bevor angenommen werden kann, dass sich die Vorrichtung an einer gewünschten Position für die Signalerfassung befindet.

Die Vorrichtung kann auf vielfältige Weise aktiviert werden, bevor sie ihren bestimmungsgemäßen Betrieb aufnimmt. Die Aktivierung kann dabei für alle Funktionen der Vorrichtung erforderlich sein, oder nur für ausgewählte Funktionen, beispielsweise nur für den Empfang von Signalen oder nur für die Übertragung von Daten. Andere Funktionen können bereits zuvor aktiviert worden sein. Es könnte auch eine mehrstufige Aktivierung für verschiedene Funktionen vorgesehen werden.

In einer beispielhaften Ausführungsform erfolgt die Aktivierung der Vorrichtung bei einer Fertigstellung der Vorrichtung, etwa durch Einsetzen eines geladenen Akkumulators. In einer anderen beispielhaften Ausführungsform erfolgt die Aktivierung der Vorrichtung durch eine Nutzereingabe. Hier kommt etwa eine Betätigung eines einfachen Schalters in Frage. Dies kann den Vorteil bieten, dass die Vorrichtung vor dem Erreichen einer Zielposition keine Energie benötigt. In einer anderen beispielhaften Ausführungsform erfolgt die Aktivierung der Vorrichtung basierend auf einer Auswertung von Daten eines in die Vorrichtung integrierten Sensors. Ein solcher Sensor kann beispielsweise ein Bewegungssensor und/oder ein Lichtsensor sein. So könnte eine Aktivierung nur dann erfolgen, wenn über einen vorgegebenen Zeitraum keine Bewegung mehr detektiert wurde. Alternativ oder zusätzlich könnte eine Aktivierung nur dann erfolgen, wenn Umgebungslicht detektiert wird, also beispielsweise wenn die Vorrichtung am Zielort aus einer Verpackung genommen wurde. Die Nutzung eines Sensors kann den Vorteil bieten, dass eine Person, die die Vorrichtung an eine Zielposition bringt, keinerlei Kenntnisse über eine Aktivierung der Vorrichtung haben muss und eine Aktivierung weder vergessen noch versehentlich vorzeitig durchführen kann. Gleichzeitig wird der Energiebedarf bis zur Erreichung der Zielposition minimiert und eine unnötige Kommunikation mit anderen Einrichtungen vor der Erreichung der Zielposition verhindert. In einer anderen beispielhaften Ausführungsform kann die Aktivierung der Vorrichtung basierend auf einer Auswertung von Daten eines in die Vorrichtung integrierten Moduls für eine satellitengestützte Positionsbestimmung erfolgen. Beispielsweise kann die Vorrichtung aktiviert werden, wenn erkannt wird, dass die Vorrichtung einen vorgegebenen Umkreis um eine vorgegebene Position erreicht hat. Im Vergleich zur Nutzung eines Bewegungssensors kann dies bei möglicherweise etwas höherem Energiebedarf den Vorteil bieten, dass eine längere Zwischenlagerung der Vorrichtung zu keiner unbeabsichtigten Aktivierung führt.

In einer anderen beispielhaften Ausführungsform erfolgt die Aktivierung der Vorrichtung automatisch bei ausreichender Stromversorgung. Ist in die Vorrichtung beispielsweise ein Solarmodul und ein bei Auslieferung der Vorrichtung nicht geladener Akkumulator integriert, so könnte ein Schaltkreis den über das Solarmodul geladenen Akkumulator bei Überschreiten einer vorgegebenen Spannung mit anderen Komponenten der Vorrichtung verbinden, um diese mit Energie zu versorgen.

In einer beispielhaften Ausführungsform umfassen die über die mindestens eine erste Funkschnittstelle empfangenen Signale nicht nur Positionsdaten, sondern auch weitere Navigationsdaten, wie die Geschwindigkeit des Fahrzeugs und/oder die Richtung des Fahrzeugs. Des Weiteren können sie auch dem Fahrzeug fest zugeordnete Daten enthalten, wie eine Identität des Fahrzeugs.

In einer beispielhaften Ausführungsform umfassen die über die mindestens eine erste Funkschnittstelle empfangenen Signale AIS Signale und/oder ADS-B Signale, und die erste Funkschnittstelle umfasst eine AIS und/oder eine ADS-B Funkschnittstelle. Dies kann den Vorteil bieten, dass für solche Signale auf einfache Weise ein bislang nicht vorhandenes, umfassendes Netzwerk aufgebaut werden kann. Die über die mindestens eine erste Funkschnittstelle empfangenen Signale können aber auch beliebige andere Signale sein, die von Wasser- oder Landfahrzeugen ausgesendet werden und mindestens Informationen zu der jeweiligen Position des sendenden Fahrzeugs enthalten. Die erste Funkschnittstelle kann dann eine Funkschnittstelle sein, die speziell für diese Übertragungen spezifiziert ist.

Für einen Anwender oder Datenanbieter, der beide Arten von Daten sammeln möchte, kann eine Vorrichtung, die eingerichtet ist, um sowohl AIS Signale als auch ADS-B Signale zu verarbeiten, den Vorteil bieten, dass sie keine zwei separate Netzwerke mit verschiedenen Vorrichtungen aufbauen und betreiben müssen. Hierdurch können Installations- und Wartungsaufwand erheblich reduziert werden. Durch eine Kombination in einer Vorrichtung können außerdem verschiedene Komponenten gemeinsam genutzt werden, wie beispielsweise Komponenten zur Stromversorgung, ein Datenspeicher, usw. Die Produktionskosten und damit die Stückkosten für eine solche Vorrichtung können also geringer ausfallen als die Produktions- und Stückkosten für zwei separate Einheiten. Auch wenn vor allem AIS-Daten nicht immer in den gleichen Gebieten wie ADS-Daten empfangbar sind, z.B. im Landesinneren bzw. im Luftraum darüber, so gibt es dennoch viele Schnittbereiche. So passiert ein Flugzeug auf dem Weg von Europa nach Amerika einmal die Küste Europa-Atlantik und einmal die Küste Atlantik-Amerika. Hinzu kommt, dass gerade große Städte mit viel Flugverkehr oftmals in Küstennähe stehen. Der freie Raum über der Meeresoberfläche ermöglicht zudem einen weitreichenden Empfang von ADS-Daten aus der Luft, der nicht durch Berge oder ähnliches gestört wird. Eine kombinierte Vorrichtung lässt sich also an vielen Orten auch doppelt nutzen. Für einen Endnutzer, der aus einem bestimmten Gebiet beide Datenarten benötigt, kann sich ferner der Vorteil ergeben, dass keine Kontaktierung und/oder kein Vertragsabschluss mit zwei verschiedenen Anbietern erforderlich ist, um AIS- und ADS-B Daten zu erhalten.

In einer beispielhaften Ausführungsform wird zur Energieversorgung der Vorrichtung die von einem Solarmodul der Vorrichtung gelieferte Energie genutzt. Durch ein integriertes Solarmodul ist ein vom Stromnetz unabhängiger Einsatz der Vorrichtung möglich; anderenfalls wäre die Anbindung an eine Stromquelle - in der Regel eine 12 Volt Stromquelle - erforderlich. Die Kombination von drahtloser Datenübertragung und Solarmodul kann den Vorteil bieten, dass die Vorrichtung völlig unabhängig von dem Vorhandensein einer technischen Infrastruktur bzw. ohne aufwendige Anbindung an eine solche verwendet werden kann.

In einer beispielhaften Ausführungsform umfasst die Vorrichtung mindestens eine Empfangsantenne und mindestens einen Empfänger zum Empfangen von von Wasser- und/oder Luftfahrzeugen ausgesandten Signalen.

In einer beispielhaften Ausführungsform umfasst die Vorrichtung einen Prozessor zum Ausführen von Programmanweisungen und einen Speicher zum Speichern mindestens eines Programms mit Programmanweisungen. Das Programm kann, zusammen mit dem das Programm ausführenden Prozessor, die Vorrichtung veranlassen, gewünschte Aktionen durchzuführen. Die Aktionen können dabei Aktionen des beschriebenen Verfahrens und/oder andere Aktionen sein.

In einer beispielhaften Ausführungsform umfasst die Vorrichtung einen Datenspeicher zum Speichern von Daten. Ein solcher Datenspeicher kann beispielsweise dazu genutzt werden, um auf empfangenen Signalen basierende Daten dauerhaft zu speichern, oder um sie zwischenzuspeichern, für den Fall dass eine Datenübertragung über die gerade genutzte Funkschnittstelle temporär nicht möglich ist. Es versteht sich, dass Daten und Programme auch in einem gemeinsamen Speicher gespeichert werden könnten.

In einer beispielhaften Ausführungsform umfasst die Vorrichtung ein Mobilfunkmodem und eine Mobilfunkantenne. Hierdurch wird eine Kommunikation über eine Mobilfunkschnittstelle ermöglicht, die für die vorgesehene Datenübertragung und/oder einen sonstigen Informationsaustausch genutzt werden kann.

In einer beispielhaften Ausführungsform umfasst die Vorrichtung eine SIM (Subscriber Identity Module) Karte.

In einer beispielhaften Ausführungsform umfasst die Vorrichtung ein Modem und eine Antenne für eine Verbindung zu lokalen Funknetzen. Hierdurch wird eine Kommunikation über eine WLAN-Funkschnittstelle ermöglicht, die für die vorgesehene Datenübertragung und/oder einen sonstige Informationsaustausch genutzt werden kann.

In einer beispielhaften Ausführungsform umfasst die Vorrichtung ein Modem und eine Antenne für eine Kommunikation über ein Kommunikationssatellitensystem. Hierdurch wird eine Kommunikation über eine Satelliten-Funkschnittstelle, beispielsweise eine Iridium-Funkschnittstelle, ermöglicht, die für die vorgesehene Datenübertragung und/oder einen sonstige Informationsaustausch genutzt werden kann.

In einer beispielhaften Ausführungsform umfasst die Vorrichtung einen Anschluss für eine physikalische Verbindung der Vorrichtung mit lokalen Kommunikationsnetzen. Dies kann den Vorteil bieten, dass die Anwendungsmöglichkeiten der Vorrichtung ausgedehnt werden. Beispielsweise kann der gleiche Typ Vorrichtung für eine Übertragung von Daten über die weitere Funkschnittstelle oder über ein lokales Kommunikationsnetz genutzt werden, sofern ein solches an einem Aufstellungsort der Vorrichtung zur Verfügung steht. Mittels eines lokalen Kommunikationsnetzes können die Daten gegebenenfalls kostengünstiger übertragen werden, als über ein Mobilfunknetz. Des Weiteren kann ein solcher Anschluss an anderen Orten als dem endgültigen Aufstellungsort der Vorrichtung genutzt werden, um die Vorrichtung zu konfigurieren oder um in der Vorrichtung gespeicherte Informationen auszulesen.

In einer beispielhaften Ausführungsform umfasst die Vorrichtung ein Solarmodul.

In einer beispielhaften Ausführungsform umfasst die Vorrichtung einen Stromnetzanschluss. Hierfür kommen etwa ein USB-Anschluss und/oder ein Stromkabel in Frage. Dies kann den Vorteil bieten, dass auf ein Solarmodul verzichtet werden kann, wenn am Aufstellungsort der Vorrichtung ein Stromnetzanschluss zur Verfügung steht.

In einer beispielhaften Ausführungsform umfasst die Vorrichtung einen Akkumulator. In einer Variante kann die primäre Stromversorgung der Vorrichtung dann über ein integriertes Solarmodul erfolgen, und der Akkumulator dient als Speicher für die Zeiten, in denen keine oder zu geringe Sonneneinstrahlung vorhanden ist. In einer anderen Variante kann die primäre Stromversorgung der Vorrichtung über ein Stromnetz erfolgen, und der integrierte Akkumulator versorgt das Gerät bei Stromausfall.

In einer beispielhaften Ausführungsform umfasst die Vorrichtung ein Modul für den Empfang von Navigationssatellitensignalen, beispielsweise GPS (Global Positioning System) Signalen. Dies kann den Vorteil bieten, dass die Vorrichtung den Server über den genauen Aufstellungsort informieren kann. Dies kann ferner den Vorteil bieten, dass die Vorrichtung ermitteln kann, ob sie sich an einem gewünschten Aufstellungsort befindet.

In einer beispielhaften Ausführungsform umfasst die Vorrichtung mindestens eine Schnittstelle für eine physikalische Verbindung mit einer externen Komponente. Dies kann den Vorteil bieten, dass die Funktionen der Vorrichtung auf vielfältige Weise erweitert werden können. Die Schnittstelle könnte beispielsweise ein USB-Anschluss für einen PC sein.

In einer beispielhaften Ausführungsform umfasst die Vorrichtung ein wetterfestes Gehäuse. Dies kann den Vorteil bieten, dass die Vorrichtung im Freien aufgestellt werden kann und die Komponenten dennoch geschützt sind. Ansonsten wäre ein Zugang zu einem Fenster mit Empfang nötig, oder eine mit einem Kabel angeschlossene separate Antenne, die für einen optimalen Empfang in der Regel auf einem Dach montiert werden müsste. Unter wetterfest ist zum Beispiel zu verstehen, dass auch bei starkem Regen kein Wasser eindringt und/oder dass auch bei Sturm im Wesentlichen kein Staub eindringt und/oder dass das Gehäuse so robust ist, dass auch größere Hagelkörner, kleinere Steine oder ähnliches keinen die Funktion der Vorrichtung beeinträchtigenden Schaden am Gehäuse anrichten können. Das Gehäuse kann beispielsweise mindestens der Schutzart IP57 und/oder mindestens der Schutzart IP4X und/oder mindestens der Schutzart IPX4 des internationalen Standards IEC 60529 (Ausgabe 1989) - oder entsprechenden Schutzklassen anderer Standards, wie der deutschen Fassung DIN EN 60529 (Ausgabe 1991) oder der DIN 40 050 Teil 9 - genügen. Vorzugsweise genügt das Gehäuse zumindest der Schutzart IP67 des IEC 60529.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### Kurze Beschreibung der Zeichnungen

In den Figuren zeigt:
- Fig. 1: ein Blockdiagramm einer beispielhaften Ausführungsform einer erfindungsgemäßen Vorrichtung;
- Fig. 2: ein Blockdiagramm eines beispielhaften Systems mit einer Vorrichtung gemäß Figur 1;
- Fig. 3: ein Ablaufdiagramme mit Verfahrensschritten einer beispielhaften Ausführungsform des erfindungsgemäßen Verfahrens; und
- Fig. 4: eine schematische Zusammenstellung möglicher Komponenten von beispielhaften Ausführungsformen einer erfindungsgemäßen Vorrichtung.

### Detaillierte Beschreibung einiger beispielhafter Ausführungsformen der Erfindung

Die vorliegende Erfindung wird im Folgenden anhand von beispielhaften Ausführungsformen beschrieben.

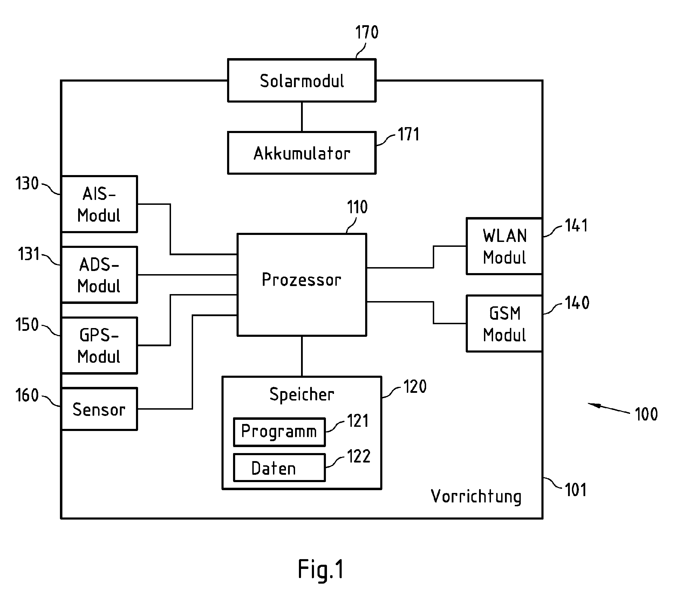

Figur 1 ist ein Blockdiagramm einer beispielhaften Ausführungsform einer erfindungsgemäßen Vorrichtung 100.

Die Vorrichtung 100 weist beispielhaft ein wetterfestes Gehäuse 101 auf, so dass die Vorrichtung 100 langfristig im Außenbereich betrieben werden kann.

Die Vorrichtung 100 umfasst des Weiteren beispielhaft einen Prozessor 110 und, mit dem Prozessor 110 verbunden, ein Speichermedium 120. Das Speichermedium 120 speichert ein Programm 121 mit Programmanweisungen. Der Prozessor 110 ist dazu eingerichtet, um Programme aus dem Speichermedium 120 auszuführen und damit die Vorrichtung 100 zu veranlassen, bestimmte Aktionen auszuführen. Die Programm 121 ist ein Programm zum Empfangen und Weiterleiten von Positionsdaten von Luft- und Wasserfahrzeugen. Statt eines einzigen Programms können für verschiedene Unterfunktionen auch verschiedene Programme vorgesehen werden. In dem Speichermedium 120 können ferner Daten 122 gespeichert werden. Des Weiteren könnten in Speichermedium 120 Parameterwerte (nicht dargestellt) als eine besondere Art von Daten separat gespeichert werden. Der Prozessor könnte ein Mikroprozessor sein. Er könnte auch in einen integrierten Schaltkreis (IC) eingebettet sein, zum Beispiel zusammen mit einem Speicher, der zumindest das Programm 121 enthält.

Die Vorrichtung 100 umfasst des Weiteren beispielhaft ein AIS Modul 130 und ein ADS Modul 131. Jedes der Module 130, 131 umfasst zumindest eine Antenne und einen Demodulator. AIS Modul 130 und ADS Modul 131 könnten auch als kombiniertes Modul ausgebildet sein. Die Vorrichtung 100 umfasst des Weiteren beispielhaft ein GSM/GPRS Modul 140. Das GSM/GPRS Modul 140 umfasst eine Antenne und eine Sender-Empfängereinheit (Transceiver) für eine Kommunikation mit einer GSM Basisstation. Das GSM/GPRS Modul 140 kann eine SIM-Karte aufweisen oder mit einer Aufnahmeeinheit für eine SIM-Karte verbunden sein. Die Vorrichtung 100 umfasst des Weiteren beispielhaft ein WLAN Modul 141. Das WLAN Modul 140 umfasst eine Antenne und eine Sender-Empfängereinheit für eine Kommunikation mit einem WLAN. Die Vorrichtung 100 umfasst des Weiteren beispielhaft ein GPS Modul 150, das eine Antenne aufweist und einen Empfänger zum Erfassen von Satellitensignalen und zum Bestimmen einer Position anhand der Satellitensignale. Jedes der Module 130, 131, 140, 141, 150 kann mit dem Prozessor 110 verbunden sein. Die Antenne von jedem der Module 130, 131, 140, 141, 150 kann innerhalb oder außerhalb des Gehäuses 101 angeordnet sein.

Die Vorrichtung 100 umfasst des Weiteren beispielhaft einen Sensor 160, der ebenfalls mit dem Prozessor 110 verbunden sein kann. Der Sensor 160 kann beispielsweise ein Bewegungssensor sein. Statt eines einzelnen Sensors könnte auch eine Mehrzahl von Sensoren vorgesehen werden, beispielsweise um Bewegungen in verschiedenen Richtungen erfassen zu können.

Die Vorrichtung 100 umfasst des Weiteren beispielhaft ein Solarmodul 170 und einen Akkumulator 171. Das Solarmodul 170 kann mit dem Akkumulator 171 verbunden sein, und der Akkumulator 171 kann seinerseits mit allen Komponenten der Vorrichtung 100 verbunden sein, die eine Energieversorgung benötigen, also insbesondere mit dem Prozessor 110, den Modulen 130, 131, 140, 141, 150 und dem Sensor 160.

Das Solarmodul 170 kann auf die Oberseite des Gehäuses 101 aufgebracht sein, oder als Teil des Gehäuses auf der Oberseite des Gehäuses 101 integriert sein.

Die Vorrichtung 100 kann optional beliebige andere Komponenten aufweisen, wie eine Bedienoberfläche oder Schnittstellen zum Anschließen externer Komponenten, usw.

In einer anderen beispielhaften Ausführungsform einer erfindungsgemäßen Vorrichtung könnte die Vorrichtung nur einen Prozessor und einen Speicher mit einem Computerprogramm umfassen, oder nur einen Schaltkreis, in dem entsprechende Funktionen hardwaremäßig implementiert sind.

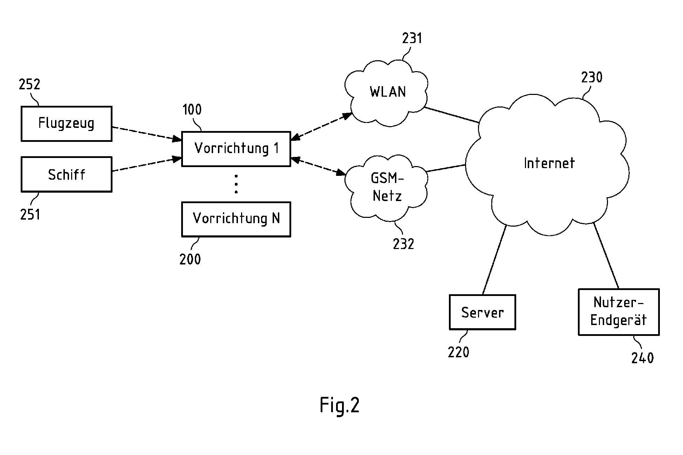

Figur 2 ist ein Blockdiagramm eines beispielhaften Systems, das eine Vorrichtung 100 gemäß Figur 1 als eine Komponente umfassen kann. Das System kann neben der Vorrichtung 100 als erste Vorrichtung noch weitere ähnlichen Vorrichtungen 200 umfassen, so dass das System insgesamt N solcher Vorrichtung umfasst, wobei N eine beliebige natürlich Zahl ist, die sich mit dem Auf- und Umbau des Systems ständig ändern kann. Das System umfasst des Weiteren einen Server 220, der mit dem Internet 230 verbunden ist.

Eine Vielzahl verschiedener WLANs 231, das GSM / GPRS Netz 232 und andere Mobilfunknetze sind ebenfalls mit dem Internet 130 verbunden. Ein Nutzerendgerät 240 kann über das Internet 230 direkt oder gegebenenfalls über ein anderes Netz 231, 232 mit dem Server 220 kommunizieren. Das Nutzerendgerät 240 kann beispielsweise ein Computer mit Bildschirm und Nutzerschnittstelle sein. Schiffe 251 senden AIS Signale aus und Flugzeuge 252 senden ADS-B Signale aus.

Die AIS Signale umfassen zum Beispiel als statische Schiffsdaten eine IMO-Nummer zur Identifizierung des Schiffes, den Schiffsname, ein Rufzeichen, eine MMSI (Maritime Mobile Service Identity) Nummer, den Schiffstyp und Abmessungen des Schiffes. Die AIS Signale umfassen zum Beispiel als dynamische Schiffsdaten einen Navigationsstatus, die Schiffsposition in Längen- und Breitengraden gemäß dem WGS 84 (World Geodetic System 1984), die Zeit der Schiffsposition, den Kurs über Grund, die Geschwindigkeit über Grund, die Vorausrichtung und die Kursänderungsrate. Die AIS Signale umfassen zum Beispiel als Reisedaten den aktuellen maximalen statischen Tiefgang, die Gefahrgutklasse der Ladung, das Reiseziel und die geschätzte Ankunftszeit. Die ADS-B Signale umfassen zum Beispiel die Position und andere Flugdaten, wie Flugnummer, Flugzeugtyp, Zeitsignal, Geschwindigkeit, Flughöhe und geplante Flugrichtung. Weitere Daten können jeweils hinzukommen.

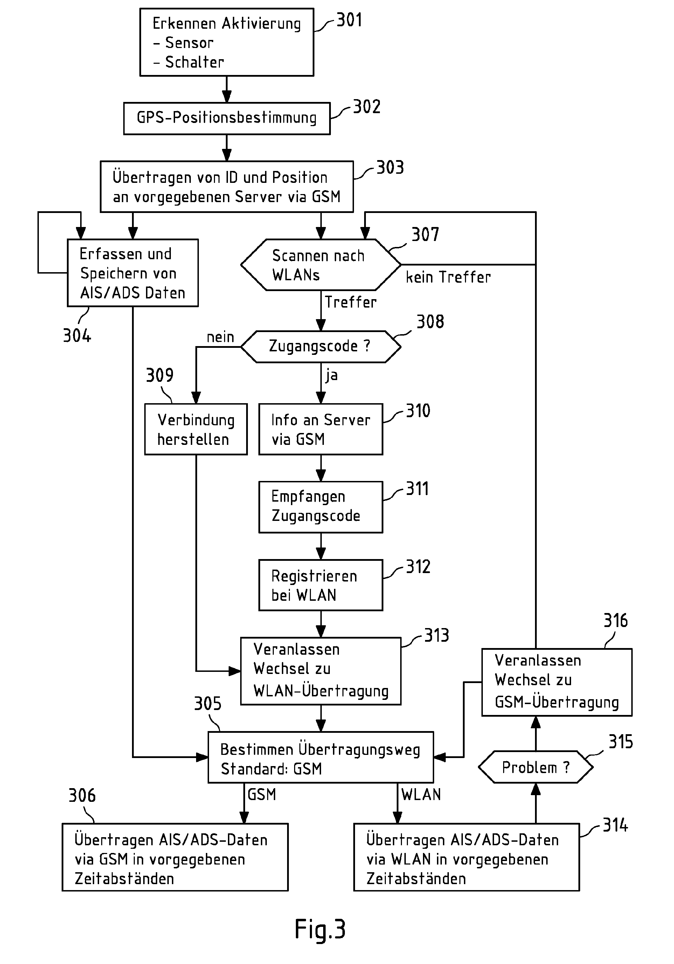

Figur 3 illustriert eine Operation der Vorrichtung 100 gemäß einem beispielhaften Ausführungsbeispiel eines erfindungsgemäßen Verfahrens. Die gezeigten Aktionen werden ausgeführt, wenn der Prozessor 110 das Programm 121 zum Empfangen und Weiterleiten von Positionsdaten ausführt.

Zum Aufbauen eines Netzes von Vorrichtungen, mit denen AIS und ADS-B Daten umfassend erfasst und von einem Server aufbereitet werden können, wird eine jeweilige Vorrichtung als kompakte Einheit ausgeliefert, die nur noch an einer Stelle abgelegt werden braucht, von der Daten geliefert werden sollen. Durch eine Positionierung an exponierten Stellen, zum Beispiel auf Hausdächern oder auf einem Felsen in einem abgelegenen Küstenabschnitt, wird ein besonders guter Empfang sowohl von Daten als auch von Sonneneinstrahlung gewährleistet. Das GSM/GPRS Modul 140 beinhaltet bereits eine geeignete SIM-Karte für das Land, in dem die Vorrichtung platziert werden soll. Im Auslieferungszustand ist der Akkumulator 171 geladen. Die einzig aktiven Komponenten sind zunächst nur Prozessor 110 und Sensor 160, so dass relativ wenig Energie benötigt wird. Alle anderen Komponenten sind inaktiv, daher wird die Vorrichtung 100 insgesamt als inaktiv angesehen.

Im inaktiven Zustand werden nur die Daten des Bewegungssensors 160 erfasst und ausgewertet. Wenn die Daten darauf hinweisen, dass die Vorrichtung 100 über eine vorgegebene Zeit hinweg nicht mehr bewegt wurde, so wird daraus geschlossen, dass sie sich an ihrem Zielpunkt befindet. Die vorgegebene Zeit kann beispielsweise ein paar Tage oder eine Woche betragen. Daraufhin werden auch die Module 130, 131, 140, 141 und 150 von dem Prozessor 110 in einen aktiven Zustand versetzt und durch den Akkumulator mit Energie versorgt. (Aktion 301) Die Aktivierung erfolgt also völlig ohne Nutzertätigkeit. Weder benötigt die Person, die die Vorrichtung 100 ablegt, Kenntnisse über das Gerät noch kann sie eine Aktivierung der Vorrichtung vergessen. Insbesondere bei einem Aufbau eines globalen Netzes kann die Möglichkeit der Verteilung der Vorrichtungen durch nicht geschulte Personen erhebliche zu einer Einsparung von Reisekosten beitragen, die ansonsten einen wirtschaftlichen Ausbau des Netzes verhindern könnten.

Die Daten des Bewegungssensors 160 können nach der Aktivierung weiter ausgewertet werden. Die Vorrichtung 100 kann dann automatisch wieder deaktiviert werden, wenn eine neue Bewegung festgestellt wird. Alternative Sensorarten, wie ein Lichtsensor, kommen für die Aktivierung ebenso in Frage.

In einer anderen Ausgestaltung könnte für die Aktivierung beispielsweise ein einfacher Schalter oder Taster vorgesehen werden, den eine Person betätigt, sobald die Vorrichtung 100 am Zielort abgelegt ist. Alle Energie benötigenden Komponenten der Vorrichtung 100 könnten dann erst mit einer solchen Aktivierung auf einmal oder in vorbestimmter Abfolge mit dem Akkumulator verbunden werden und/oder aus einem Ruhezustand in einen aktiven Zustand versetzt werden. Dies kann den Vorteil haben, dass bei längeren Zwischenlagerungszeiten der Vorrichtung 100 nicht fälschlicherweise die Erreichung des Zielorts angenommen wird und dass sich der Akkumulator während solcher Zwischenlagerungszeiten nicht zu weit entlädt.

Es wird davon ausgegangen, dass der Zielort so gewählt wird, dass das Solarmodul 170 der Vorrichtung 100 über große Zeitabschnitte Sonnenstrahlen ausgesetzt ist und den Akkumulator 171 in Allgemeinen auch für die Überbrückung der Zwischenzeiten ausreichend aufladen kann.

Nach einer Aktivierung der Vorrichtung 100 wird eine Positionsbestimmung durch das GPS Modul 150 durchgeführt. (Aktion 302) Es versteht sich, dass anstelle des GPS Moduls auch ein Modul für ein anderes Satellitennavigationssystem genutzt werden könnte.

Die Position der Vorrichtung 100 kann dann einmalig an den Server 220 übertragen werden. (Aktion 303) Die Übertragung erfolgt dabei mittels des GSM/GPRS Moduls 140 über das GSM/GPRS Netz 232 und das Internet 230. Die Adresse des Servers 220 kann dabei fest in dem Programm 121 vorgegeben sein. Alternativ kann die Adresse im Speicher 120 als Parameter vorgegeben sein, der bei Bedarf vom Prozessor 110 ausgelesen wird. Wenn Vorrichtungen für verschiedene Netze einsetzbar sein sollen, in denen jeweils ein anderer Server die Daten sammelt, so kann vor der Auslieferung einer jeweiligen Vorrichtung der Parameter im Speicher 120 entsprechend gesetzt werden. Außerdem könnte dann bei einem geplanten Änderung der Serveradresse die neue Adresse an die Vorrichtung 100 geschickt werden, die dann einfach im Speicher 120 den Parameter mit der alten Adresse mit einem Parameter mit der neuen Adresse überschreibt. Gleichzeitig mit der Übermittlung der Position kann die Vorrichtung 100 auch eine Identifizierung der Vorrichtung 100 übermitteln, und sich somit beim Server 220 als einsatzbereit registrieren. Die Identifizierung kann dabei auf der Identifizierung in der SIM-Karte beruhen.

Nach einer Aktivierung erfasst außerdem das AIS Modul 130 AIS Signale, die von Schiffen 251 ausgesendet werden, die sich in Reichweite befinden. Ebenso erfasst das ADS Modul 131 nach einer Aktivierung ADS-B Signale, die von Flugzeugen 252 ausgesendet werden, die sich in Reichweite befinden. Beide Module 130, 131 führen eine Demodulation der empfangenen Signale durch, und leiten die resultierenden Daten an den Prozessor 110 weiter. Gegebenenfalls können die Module 130, 131 die Daten vor dem Weiterleiten noch weiter Verarbeiten, beispielsweise dekodieren.

Eine in Speicher 120 gespeicherte Programmanweisung zur Aktivierung der Module 130, 131 könnte von Prozessor 110 unmittelbar nach der Aktivierung der Vorrichtung 100 ausgeführt werden, oder nach der Registrierung der Vorrichtung 100 beim Server 220. Alternativ könnten die Module 130, 131 auch automatisch mit der Aktivierung der Vorrichtung in Aktion 301 aktiviert werden.

Der Prozessor 110 empfängt die Daten und speichert sie vorsorglich in Speicher 120 für den Fall, dass eine sofortige Weiterleitung an den Server 220 nicht möglich ist. (Aktion 304) Es ist auch möglich, dass der Prozessor 110 die Daten verarbeitet und/oder ergänzt, zum Beispiel mit einer Angabe zur Identität und zur Position der Vorrichtung 100. In dem Fall könnte die separate Registrierung der Vorrichtung 100 beim Server 220 in Aktion 303 auch entfallen.

Eine Übertragung der gespeicherten Daten an den Server 220 erfolgt in vorgegebenen Zeitabständen. Der Prozessor 110 ermittelt hierzu jeweils zunächst, auf welchem Übertragungsweg die Daten zum Server 220 zu übermitteln sind. (Aktion 305) Standardmäßig wird von den zuständigen Programmanweisungen angenommen, dass eine Übermittlung durch das GSM/GPRS Modul 140 erfolgen soll.

Solange keine andere Vorgabe von einer anderen Programmanweisung kommt, verursacht der Prozessor 110 somit zunächst eine Übertragung der aufbereiteten Daten mittels des GSM/GPRS Moduls 140. Hierzu kodiert der Prozessor 110 die Daten und wandelt sie in versandfähige Datenpakete um. Das GSM/GPRS Modul 140 sendet die Datenpakete über das GSM/GPRS Netz 232 und das Internet 230 an den Server 220. (Aktion 306) Sobald die Daten übertragen sind, können sie aus dem Speicher 120 gelöscht werden. Hierdurch kann der Speicherbedarf gering gehalten werden.

Parallel hierzu oder während Pausen in der Datenverarbeitung und Übermittlung scannt die Vorrichtung 100 mittels des WLAN Moduls 141 nach lokalen Funknetzen 231 in der Umgebung. (Aktion 307) Wird kein WLAN bzw. kein WLAN mit zufriedenstellender Signalstärke gefunden, so erfolgt die Übertragung der Daten an den Server 220 dauerhaft über das GSM/GPRS Modul 140. In regelmäßigen, größeren Abständen kann die Suche nach WLANs jedoch wiederholt werden, da ständig neue WLANs eingerichtet werden. Die Suche kann beispielsweise einmal die Woche erfolgen und zusätzlich beispielsweise jedes Mal, wenn festgestellt wird, dass eine genutzte Verbindung nicht mehr zur Verfügung steht.

Wird in Aktion 307 ein WLAN 231 gefunden, so wird bestimmt, ob seine Nutzung die Kenntnis eines Zugangscodes/Kennworts erfordert. (Aktion 308)

Erfordert die Nutzung eines gefundenen WLANs 231 keinen Zugangscode, so veranlasst der Prozessor 110 das WLAN Modul 141 eine Verbindung zu dem WLAN 231 herzustellen (Aktion 309).

Erfordert die Nutzung eines gefundenen WLANs 231 dagegen die Kenntnis eines Zugangscodes, so werden über das GSM/GPRS Modul 140 Informationen über das WLAN 231 an den Server 220 geschickt. (Aktion 310) Der Server 220 kann dann prüfen, ob der Zugangscode erhältlich ist. Ist dies der Fall, so schickt der Server 220 den Zugangscode über das Internet 230 und das GSM/GPRS -Netz 232 an die Vorrichtung 100.

Die Vorrichtung 100 empfängt den Zugangscode über das GSM/GPRS Modul 140 (Aktion 311), und Prozessor 110 veranlasst WLAN Modul 141 sich unter Verwendung des Zugangscodes bei dem WLAN 231 zu registrieren und eine nutzbare Verbindung herzustellen (Aktion 312). Der Zugangscode kann auch zusammen mit einer Identifizierung des WLANs 231 in Speicher 120 gespeichert werden. Dadurch kann das WLAN 231 zum Beispiel nach einer zeitweiligen Abschaltung ohne erneute Abfrage des Zugangscodes erneut genutzt werden. Das WLAN Modul 141 kann verschiedene Sicherheitsstandards unterstützen, wie WEP (Wired Equivalent Privacy), WPA (Wi-Fi Protected Access) oder WPA2 und andere, damit auf eine möglichst große Zahl von WLANs zugegriffen werden kann.

Gelingt es in Aktion 309 bzw. 312 eine Verbindung herzustellen, so veranlasst der Prozessor 110 dann einen Wechsel zu dem WLAN 231 für die weitere Übertragung der AIS und ADS Daten. (Aktion 313) Hierzu kann beispielsweise ein Parameter in Speicher 120 von einem Wert für "GSM-Übertragung" auf einen Wert für "WLAN-Übertragung" gesetzt werden, der von den Programmanweisungen, die in Aktion 305 den jeweiligen Übertragungsweg bestimmen, vor jeder Übertragung ausgelesen wird.

Wird nun für die Übermittlung eines neuen Satzes Daten in Aktion 305 bestimmt, dass eine WLAN-Übertragung erfolgen soll, so verursacht der Prozessor 110 eine Übertragung der aufbereiteten Daten mittels des WLAN Moduls 141. Auch hierzu kodiert der Prozessor 110 die Daten und wandelt sie in für eine WLAN-Übertragung nutzbare Datenpakete um. Das WLAN Modul 141 sendet die Datenpakete über das WLAN 231 und das Internet 230 an den Server 220. (Aktion 314) Sobald die Daten übertragen sind, werden sie aus dem Speicher 120 gelöscht.

Die eingerichtete WLAN Verbindung wird nun in den vorgegebenen Zeitabständen für alle weiteren Übertragungen genutzt, bis festgestellt wird, dass die WLAN Verbindung unterbrochen wurde oder dass ein sonstiges Problem mit der Verbindung aufgetreten ist. (Aktion 315) In dem Fall wird wieder durch Rücksetzen des entsprechenden Parameters ein Wechsel auf eine GSM/GPRS Übertragung verursacht (Aktion 316) und ein neues Scannen nach weiteren WLANs veranlasst (Aktion 307). Für die eigentlich Übertragung kann dann auf den nächsten Zeitpunkt gewartet werden, zu dem der Übertragungsweg bestimmt wird (Aktion 305), und die Daten können dann mit den neu hinzugekommenen Daten über das GSM/GPRS-Netz 232 übertragen werden (Aktion 306).

Ergibt sich dagegen ein Problem mit der GSM/GPRS Übertragung, wenn diese ausgewählt wurde, so wird einfach auf den jeweils nächsten Übertragungszeitpunkt gewartet. Sobald eine Übertragung wieder möglich ist, werden dann alle noch im Speicher befindlichen Daten auf einmal übertragen.

Der Server 200 empfängt Datenpakete von einer Vielzahl von Vorrichtungen wie der Vorrichtung 100, dekodiert die Daten und bereitet sie zur Präsentation auf. Die Präsentation kann zum Beispiel auf getrennten Web-Seiten für die AIS Daten und die ADS Daten erfolgen, und/oder auf einer gemeinsamen Web-Seite. Ein Nutzer kann mit einem Nutzerendgerät 240, zum Beispiel einem PC, über das Internet 230 die Daten von der gewünschten Web-Seite abrufen. Die Präsentation kann dabei ähnlich sein wie bei herkömmlichen AIS Empfängern und ADS-B Empfängern.

Die Positionsdaten der Vorrichtung 100 sind zur Bereitstellung der AIS und ADS-B Daten auf einer Web-Seite nicht unbedingt erforderlich. Sie erlauben es aber beispielsweise, die Daten aus bestimmten Gebieten gemeinsam zu verarbeiten, etwa wenn die Präsentation gebietsweise erfolgen soll. Sie können außerdem für eine Verwaltung der Vorrichtungen verwendet werden. So lässt sich beispielsweise bestimmen, in welchen Gebieten bereits eine gute Abdeckung mit Vorrichtungen besteht. Liefert eine bestimmte Vorrichtung über eine längere Zeit keine Daten mehr, so kann auch bestimmt werden, um welche Vorrichtung es sich handelt und wo sie positioniert ist bzw. war, so dass sie gegebenenfalls ersetzt werden kann.

Zusammengefasst kann die beschriebene autonome Empfangs- und Sendeeinheit sowohl AIS- als auch ADS-B-Daten parallel zueinander empfangen und sie per Mobilfunk oder per WLAN, sofern verfügbar, an einen Server übertragen. Die Daten können dann auf einer Internet-Plattform für Anwender zugänglich gemacht werden. Die Weiterleitung über eine Funkschnittstelle ermöglicht einen autonomeren Einsatz der Vorrichtung, als dies mit einer Nutzung einer direkten, physischen Anbindung an ein Telefonnetz oder Ähnlichem der Fall wäre. Diese Unabhängigkeit wird durch die Stromversorgung über ein Solarmodul vervollständigt. Mit dieser integrierten, autonomen Ausgestaltung kann die Bereitstellung von ADS-B und AIS Daten mit geringen Einrichtungs-, Wartungs- und Reparaturkosten erfolgen. Durch die Nutzung von WLAN lassen sich zudem die Betriebskosten minimieren.

Die Vorrichtung 100 aus Figur 1 kann in vielfältiger Weise abgewandelt werden, sowohl durch das Weglassen von Komponenten wie auch durch das Hinzufügen von Komponenten. Hierdurch können sich weitere oder alternative Vorteile ergeben.

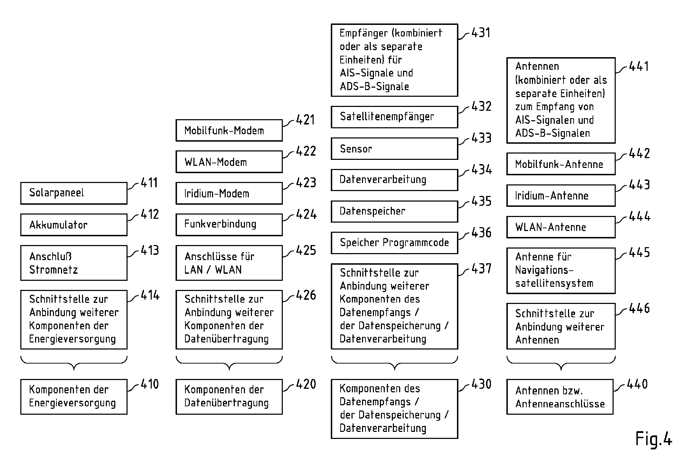

Figur 4 ist ein Blockschaltbild, das - in nicht abschließender Weise - mögliche Komponenten einer erfindungsgemäßen Vorrichtung nach Funktionalität zusammenfasst.

So können verschiedene Komponenten 410 für die Energieversorgung vorgesehen werden. Diese Komponenten können ein Solarpaneel 411 und/oder einen Akkumulator 412 umfassen. Zusätzlich oder alternativ kann aber auch ein Anschluss 413 für ein vorhandenes Stromnetz vorgesehen sein. Optional kann ein solcher Anschluss 413 einen Spannungswandler aufweisen, der die Nutzung verschiedener Netzspannungen erlaubt. Zusätzlich kann ein solcher Anschluss 413 eine oder mehrere Buchsen für das Anschließen verschiedener Typen von Netzsteckern aufweisen. Eine solche Ausgestaltung ermöglicht eine internationale Anwendung, ohne dass die Vorrichtung entsprechend modifiziert werden müsste. Dies kann insbesondere deshalb nützlich sein, da der größere Anteil von Schifffahrten und Luftverkehr zwischenstaatlich ist und sich einige Vorteile bei der Nutzung von AIS- und ADS-B-Daten erst aus dem internationalen Kontext ergeben. Zusätzlich oder alternativ kann eine Schnittstelle 414 zur Anbindung weiterer externer Komponenten für die Energieversorgung vorgesehen werden, beispielsweise in Form einer USB Buchse.

Des Weiteren können verschiedene Komponenten 420 für die Datenübertragung vorgesehen werden. Diese Komponenten können ein Mobilfunk-Modem 421 und/oder ein WLAN Modem 422 umfassen. Die Verwendung eines GSM- und/oder GPRS-Modems als Mobilfunk-Modem erlaubt eine internationale Anwendung. Zusätzlich oder alternativ kann aber auch ein Iridium-Modem 423 für eine Datenübertragung per Satelliten vorgesehen werden, die auch in nicht für den Mobilfunk erschlossenen Gegenden möglich ist. Das jeweilige Modem 421, 422, 423 kann dabei optional auch Teil einer jeweiligen Sender-Empfängereinheit mit umfassenderen Funktionalitäten sein. Des Weiteren könnten Module 424 für weitere Funkverbindungen vorgesehen sein. Ein solches Modul könnte beispielsweise ein Transponder sein, der es erlaubt, grundlegende Daten einer Vorrichtung auszulesen, wie eine Identifikation oder eine Angabe des Landes, für das die Vorrichtung aufgrund einer enthaltenen SIM-Karte vorgesehen ist. Des Weiteren könnte ein Anschluss 425 für ein lokales Netz (LAN) oder für ein externes Modul für ein WLAN vorgesehen werden. Ebenso könnten Schnittstellen 426 zur Anbindung beliebiger weiterer externer Komponenten für eine Datenübertragung vorgesehen werden.

Des Weiteren können verschiedene Komponenten 430 für den Datenempfang, die Datenspeicherung und die Datenverarbeitung vorgesehen werden. So können separate Empfänger (Receiver) oder ein kombinierter Empfänger 431 für AIS und ADS-B Signale vorgesehen werden. Außerdem könnte ein Satellitenempfänger 432 für ein beliebiges globales Navigationssatellitensystem vorgesehen werden. Außerdem könnte ein Sensor 433, wie ein Bewegungssensor, ein Beschleunigungssensor oder ein Lichtsensor, vorgesehen werden. Außerdem könnte eine Datenverarbeitungseinheit 434, zum Beispiel in Form eines Mikroprozessors oder in Form einer Hardwareschaltung, vorgesehen werden. Außerdem könnte ein Speicher 435 zum Speichern von Programmanweisungen und ein Speicher 436 zum Speichern von Daten vorgesehen werden. Hierzu kann auch ein gemeinsamer Speicher vorgesehen sein. Außerdem könnte mindestens eine Schnittstelle 437 zur Anbindung weiterer externer Komponenten des Datenempfangs, der Datenspeicherung und/oder der Datenverarbeitung vorgesehen werden.

Mögliche Beispiele sind ein externer GPS-Empfänger, ein externer Speicher oder ein PC.

Des Weiteren können verschiedene Antennen bzw. Antennenanschlüsse 440 vorgesehen werden. Die Antennen können Antennen 441 zum Empfang von AIS und/oder ADS-B Signalen umfassen. Dabei können Antennen für beide Signalarten baulich so kombiniert werden, dass sie beim Zusammenbauen der Vorrichtung als eine einzige Einheit gehandhabt werden können. Außerdem kann eine Mobilfunkantenne 442, wie eine GSM / GPRS Antenne, und/oder eine Iridium-Antenne 443 und/oder eine WLAN Antenne 444 vorgesehen sein. Außerdem kann eine Antenne für Signale von Navigationssatelliten 445 vorgesehen sein. Zumindest einige der Antennen könnten auch in ein Modul zusammen mit dem jeweils zugehörigen Modem, Empfänger, Sender oder Transceiver integriert sein. Außerdem kann eine Schnittstelle 446 zur Anbindung weiterer externer Antennen vorgesehen sein.

Durch die optionalen Schnittstellen 414, 426, 437, 446 ist es möglich, die Vorrichtung mit verschiedenen Funktionen nachzurüsten, etwa auch mit Messeinheiten. Denkbar wäre somit auch beispielsweise der Empfang und die Übermittlung von lokalen Wetterdaten, Ergebnissen von Luftmessungen oder Funkdaten anderer Sendeeinheiten.

Es versteht sich, dass die Vorrichtung ebenso diverse andere Komponenten und Schnittstellen enthalten könnte. Einer Nutzerschnittstelle könnte beispielsweise vorgesehen werden, um vor Ort auf einfache Weise Daten der Vorrichtung abzurufen oder um einen Zugangscode eines WLANs einzugeben, usw.

Die dargestellten oder beschriebenen Verbindungen zwischen Komponenten sind als funktionale Verbindungen zu verstehen. Sie können direkt oder indirekt über mehrere andere Komponenten realisiert werden. Die Abfolge der geschilderten Aktionen in den einzelnen Ablaufdiagrammen ist nicht zwingend; alternative Abfolgen der Verfahrensschritte sind denkbar. Die Aktionen können auf verschiedene Art und Weise implementiert werden; so ist eine Implementierung nicht nur in Software (durch Programmanweisungen), sondern auch nur in Hardware oder in einer Kombination von beidem denkbar.

Es versteht sich, dass die beschriebenen Ausführungsformen lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Verfahren ausgeführt von einer Vorrichtung (100), das Verfahren umfassend:
- Erfassen von von Wasser- und/oder Luftfahrzeugen (251, 252) ausgesandten Signalen über mindestens eine erste Funkschnittstelle, wobei die Signale von einem jeweiligen Fahrzeug (251, 252) Daten umfassen, die zumindest eine Position des Fahrzeugs (251, 252) angeben; und
- Übermitteln von auf den empfangenen Signalen basierenden Daten an einen vorgegebenen Server (220) über eine weitere Funkschnittstelle.

2. Verfahren gemäß Anspruch 1, wobei die Vorrichtung (100) ein Mobilfunkmodul (140) umfasst, und wobei die auf den empfangenen Signalen basierende Daten nach einer Aktivierung der Vorrichtung (100) automatisch mittels des Mobilfunkmoduls (140) über die weitere Funkschnittstelle zum Server (220) übertragen werden.

3. Verfahren gemäß Anspruch 1 oder 2, wobei die Vorrichtung (100) ein Mobilfunkmodul (140) umfasst, und wobei nach einer Aktivierung der Vorrichtung (100) automatisch eine Registrierung der Vorrichtung (100) bei dem Server (220) über eine Funkschnittstelle mittels des Mobilfunkmoduls (140) erfolgt.

4. Verfahren gemäß einem der Ansprüche 1 bis 3, wobei die Vorrichtung (100) ein Modul für eine Kommunikation mit lokalen Funknetzen (141) umfasst und wobei nach einer Aktivierung der Vorrichtung (100) automatisch
- eine Suche nach lokalen Funknetzen (231) durchgeführt wird, und
- die auf den empfangenen Signalen basierende Daten mittels des Moduls für eine Kommunikation mit lokalen Funknetzen (141) über die weitere Funkschnittstelle und über ein bei der Suche erfasstes lokales Funknetz (231) an den Server (220) übermittelt werden.

5. Verfahren gemäß Anspruch 4, wobei die Vorrichtung (100) ein Mobilfunkmodul (140) aufweist und wobei das Verfahren des Weiteren umfasst:
- Senden von Informationen, die sich auf ein bei der Suche erfasstes lokales Funknetz (231) beziehen, mittels des Mobilfunkmoduls (140) an den Server (220), wobei die an den Server (220) übermittelten Informationen eine Angabe enthalten, ob das gefundene lokale Funknetz (231) einen Zugangscode erfordert,
- Empfangen eines Zugangscodes für das gefundene lokale Funknetz (231) vom Server (220) mittels des Mobilfunkmoduls (140), und
- Anmelden bei dem lokalen Funknetz (231) mittels des empfangenen Zugangscodes vor einem Übermitteln der auf den empfangenen Signalen basierenden Daten über das bei der Suche erfasste lokale Funknetz (231).

6. Verfahren gemäß einem der Ansprüche 1 bis 5, wobei die Erfassung der von Wasser- und/oder Luftfahrzeugen (130, 131) ausgesandten Signalen
- automatisch ab Fertigstellung der Vorrichtung (100) erfolgt; oder
- automatisch nach einer Aktivierung der Vorrichtung (100) veranlasst wird.

7. Verfahren gemäß einem der Ansprüche 1 bis 6, wobei eine Aktivierung der Vorrichtung (100)
- bei einer Fertigstellung der Vorrichtung (100) erfolgt; oder
- bei ausreichender Stromversorgung erfolgt; oder
- durch eine Nutzereingabe erfolgt; oder
- basierend auf einer Auswertung von Daten eines in die Vorrichtung (100) integrierten Sensors (160) erfolgt; oder
- basierend auf einer Auswertung von Daten eines in die Vorrichtung (100) integrierten Moduls für eine satellitengestützte Positionsbestimmung (150) erfolgt.

8. Verfahren gemäß einem der Ansprüche 1 bis 7, wobei die über die mindestens eine erste Funkschnittstelle empfangenen Signale AIS (automatic identification system) Signale und/oder ADS-B (automatic dependent surveillance - broadcast) Signale umfassen.

9. Verfahren gemäß einem der Ansprüche 1 bis 8, wobei zur Energieversorgung der Vorrichtung (100) von einem Solarmodul (170) der Vorrichtung (100) gelieferte Energie genutzt wird.

10. Vorrichtung (100) umfassend Mittel (110, 120, 130, 131, 140, 141, 150, 160, 170) zur Ausführung des Verfahrens gemäß einem der Ansprüche 1 bis 9.

11. Vorrichtung (100) gemäß Anspruch 10, die mindestens eine der folgenden Komponenten umfasst:
- mindestens eine Empfangsantenne (441) und mindestens einen Empfänger (431) zum Empfangen von von Wasser- und/oder Luftfahrzeugen (251, 252) ausgesandten Signalen;
- einen Prozessor (110) zum Ausführen von Programmanweisungen (121) und einen Speicher (120) zum Speichern eines Programms (121) mit Programmanweisungen;
- einen Datenspeicher (120) zum Speichern von Daten (122);
- ein Mobilfunkmodem (421) und eine Mobilfunkantenne (442);
- eine SIM-Karte;
- eine Modem (422) und eine Antenne (444) für eine Kommunikation mit lokalen Funknetzen;
- eine Modem (423) und eine Antenne (443) für eine Kommunikation über ein Kommunikationssatellitensystem;
- einen Anschluss (425) für einen physikalische Verbindung der Vorrichtung (100) mit lokalen Kommunikationsnetzen;
- ein Solarmodul (411);
- einen Stromnetzanschluss (413);
- einen Akkumulator (412);
- einen Empfänger (432) und eine Antenne (445) für Navigationssatellitensignale;
- mindestens eine Schnittstelle (414, 426, 437, 446) für eine physikalische Verbindung mit einer externen Komponente; und
- ein wetterfestes Gehäuse (101).

12. System umfassend mindestens eine Vorrichtungen (100, 200) gemäß Anspruch 10 oder 11 und den vorgegebenen Server (220).

13. Programm (121) umfassend
- Programmanweisungen, wobei die Programmanweisungen bei Ausführung durch einen Prozessor (110) eine Vorrichtung (100) zur Ausführung des Verfahrens gemäß einem der Ansprüche 1 bis 9 veranlassen.

14. Speichermedium (120), das ein Programm (121) gemäß Anspruch 13 speichert.
